# EUROPÄISCHE PATENTSCHRIFT

(11) **EP 3 809 228 B1**
(45) Veröffentlichungstag und Bekanntmachung des Hinweises auf die Patenterteilung: **21.09.2022**
(21) Anmeldenummer: 20196128.1
(22) Anmeldetag: 15.09.2020
(51) Int. Cl.: G05D 1/02

(54) **VERFAHREN ZUM NAVIGIEREN EINES FLURFÖRDERZEUGS**
METHOD FOR NAVIGATING AN INDUSTRIAL TRUCK
PROCÉDÉ DE NAVIGATION D'UN CHARIOT DE MANUTENTION

(30) Priorität: 18.10.2019 DE 102019128253
(43) Veröffentlichungstag der Anmeldung: 21.04.2021
(73) Patentinhaber: StreetScooter GmbH, 52070 Aachen (DE)
(72) Erfinder: Bellof, Marco, 52070 Aachen (DE); Turan, Bugra, 52072 Aachen (DE); Müller, Sebastian, 31162 Bad Salzdetfurth (DE)
(74) Vertreter: Michalski Hüttermann & Partner Patentanwälte mbB

(56) Entgegenhaltungen:
- DE-A1- 10 234 730
- US-A1- 2013 060 461
- US-A1- 2014 074 342

## Beschreibung

Die Erfindung betrifft ein Verfahren zum Navigieren eines Flurförderzeugs in einem vorbestimmten Bereich mit den Verfahrensschritten:
- Bereitstellen einer Karte des vorbestimmten Bereichs mit permanenten Landmarken und
- Navigieren des Flurförderzeugs in dem vorbestimmten Bereich auf der Grundlage der Karte.

Flurförderzeuge sind Fördermittel für horizontalen Transport von Gütern, die zu ebener Erde eingesetzt werden. Gegenstücke sind die flurfreien Fördermittel, die entweder an Hallendecken hängen oder Schienen nutzen. Heutzutage wird in den einschlägigen Normen der Begriff Flurförderzeug verwendet. Andere Quellen verwenden auch den Begriff Flurfördermittel. Lagerlogistiker unterscheiden grundsätzlich Flurförderzeuge in gleislose Flurförderzeuge, wie Hubwagen, Schlepper, Stapler, gleisgebundene Flurförderzeuge, wie Loren, und spurgeführte Flurförderzeuge, wie fahrerlose Transportsysteme. Eine engere Definition wird durch die Berufsgenossenschaftliche Vorschrift "DGUV Vorschrift 68" (vormals BGV D27) angegeben. Danach sind Flurförderzeuge Fördermittel, die ihrer Bauart nach dadurch gekennzeichnet sind, dass sie mit Rädern auf Flur laufen und frei lenkbar, zum Befördern, Ziehen oder Schieben von Lasten eingerichtet und zur innerbetrieblichen Verwendung bestimmt sind.

Durch Logistikprozesse, wie das Versetzen von Containern durch Flurförderzeuge, wird das statische Umfeld eines Betriebshofs, auf dem z.B. Container und Wechselbrücken abgestellt werden, stetig verändert. Dadurch werden bekannte Lokalisierungmethoden beeinflusst und es kann zu fehlerhaften Ergebnissen bei der Navigation eines autonom fahrenden Flurförderzeugs auf dem Betriebshof kommen.

In diesem Zusammenhang beschreibt die DE 10 2015 011 358 A1, dass bei autonomen Fahrten, denen eine digitale Karte K zugrunde liegt, stets das Problem der Aktualität der digitalen Karte K auftritt. Die Umgebung um das Fahrzeug verändert sich, woraus Fehlinterpretationen bei einer Lokalisierung anhand der zu einem früheren Zeitpunkt erstellten digitalen Karte K resultieren. Zum Beispiel können Probleme bei der Verwendung von sich im Zeitverlauf veränderten Objekten als Landmarken auftreten. Beispielsweise können sich Bäume im Lauf der Jahreszeiten derart stark verändern, dass eine Lokalisierung im Winter, basierend auf einer im Sommer aufgezeichneten digitalen Karte K, nicht möglich ist. Ein weiteres Beispiel sind dynamische Objekte, d. h. Objekte, welche zwar während der Erstellung der digitalen Karte K unbeweglich sind und daher als relevante Objekte erfasst werden, welche aber bewegbar sind, beispielsweise andere Fahrzeuge, welche zu einem späteren Zeitpunkt nach der Erstellung der digitalen Karte K sich nicht mehr am während der Erstellung der digitalen Karte K erfassten Ort befinden. Dies betrifft beispielsweise Fahrzeuge auf öffentlichen Parkplätzen, welche aufgrund einer sich verändernden Parkplatzbelegung zu verschiedenen Zeitpunkten auf dem Parkplatz vorhanden oder nicht vorhanden sind.

Des Weiteren werden in der DE 10 2016 211 625 A1 ein Verfahren und ein System zur Verwendung geparkter Fahrzeuge als Landmarken zur vorteilhaften Beeinflussung der Robustheit von Fahrzeuglokalisierungs-Systemen beschrieben wird. Dabei wird ein Verfahren zur Erstellung einer digitalen Karte zur Lokalisierung von sich bewegenden Kraftfahrzeugen vorgeschlagen, wobei mindestens ein stehendes Kraftfahrzeug als eine zur Lokalisierung vorgesehene Landmarke verwendet wird. Das stehende Kraftfahrzeug übermittelt hierbei als Landmarke eine Information über seine Position auf der digitalen Karte, insbesondere über seine Position relativ zu mindestens einer auf der digitalen Karte lokalisierten zweiten Landmarke an einen Server.

Konkret erläutert die DE 10 2016 211 625 A1 dazu, dass es aufgrund eines häufigen Standortwechsels der parkenden Fahrzeuge zu einer häufig nötigen Änderung der digitalen Karte kommen kann, um eine nötige Lokalisierungsgenauigkeit noch zu garantieren. Daher müsste in solchen Fällen ein Fahrzeug immer wieder die Trajektorie abfahren, um die neuen Objekte auf der Karte zu erfassen, was einen großen Mehraufwand darstellt. Bei dem Verfahren zur Erstellung einer digitalen Karte zur Lokalisierung von sich bewegenden Kraftfahrzeugen wird mindestens ein stehendes Kraftfahrzeug als eine zur Lokalisierung vorgesehene Landmarke verwendet. Das stehende Kraftfahrzeug übermittelt hierbei als Landmarke eine Information über seine Position auf der digitalen Karte, insbesondere über seine Position relativ zu mindestens einer auf der digitalen Karte lokalisierten zweiten Landmarke an einen Server. Durch diese sogenannte Kommunikation können die stehenden Kraftfahrzeuge von sich aus ihren Standort übermitteln und müssen nicht erst durch andere Kraftfahrzeuge erfasst werden. Hierdurch wird die Aktualität der digitalen Karte besser gewährleistet, was wiederum eine Erhöhung der Lokalisierungsgenauigkeit für die, die digitale Karte nutzenden, Kraftfahrzeuge zur Folge hat."

Die DE 10 2017 105 086 A1 beschreibt, wie die Aktualisierung von Landmarkenkarten verbessert werden soll. Dazu erfolgt ein Befahren eines Bereichs mit einem Fahrzeug, Aufnehmen des Bereichs von dem Fahrzeug aus unter Gewinnung von Bereichsdaten und Gewinnen von Fahrzeugpositionsdaten des Fahrzeugs in dem Bereich. Eine gegenüber der Landmarkenkarte veränderte Anwesenheit oder Abwesenheit einer Landmarke in den Bereichsdaten wird mit Bezug auf die Fahrzeugpositionsdaten ermittelt. Schließlich wird die Landmarkenkarte in Bezug auf die Landmarke aktualisiert.

In der DE 10 2015 011 467 A1 wird ein Verfahren zur Erstellung einer digitalen Karte eines Parkraums beschrieben. Erfindungsgemäß werden mittels einer Mehrzahl von Fahrzeugen den Parkraum betreffende Kartendaten und Stellplatztrajektoriendaten erfasst und an eine Zentrale zur Erstellung einer digitalen Karte übermittelt, wobei die Zentrale einem zu parkenden Fahrzeug die digitale Karte und eine jeweilige Stellplatztrajektorie übermittelt.

Aus der DE 102 34 730 A1 ist ein Verfahren zur Positionsbestimmung eines Transportfahrzeuges, insbesondere eines Flurförderfahrzeuges, innerhalb eines vorbestimmten Wirkbereiches des Fahrzeuges bekannt, in dem bewegliche, vom Transportfahrzeug transportierte erste Objekte sowie ortsfeste zweite Objekte vorhanden sind. Hierbei wird eine Kontur der in einer Umgebung einer momentanen Position des Transportfahrzeuges vorhandenen ersten Objekte abgetastet und mit einer digital gespeicherten Karte von allen im Wirkbereich des Transportfahrzeuges vorhandenen ersten Objekten verglichen und aus dem Vergleich eine Position des Transportfahrzeuges innerhalb der digitalen Karte bestimmt, wobei immer dann, wenn das Fahrzeug ein Objekt aufnimmt oder abstellt, die Position des Transportfahrzeuges durch exakte Vermessung markanter Punkte der ersten und/oder zweiten Objekte in der Umgebung vom Transportfahrzeug aus und eine Ausrichtung des Transportfahrzeugs bestimmt wird und die in der digitalen Karte gespeicherten Daten über die ersten Objekte entsprechend aktualisiert werden.

Die 102 20 936 A1 beschreib eine Vorrichtung zur Positionsbestimmung in einer Umgebung und zur Ermittlung und Aktualisierung von Landmarken mittels die Umgebung beschreibenden Informationsdaten. Die Vorrichtung weist ein Navigationssystem zur Ermittlung einer Eigenposition in der Umgebung auf. Veränderungen von beweglichen Landmarken durch die Vorrichtung werden von selbiger registriert und die Umgebung beschreibende Informationsdaten werden verändert. Über Sende- und Empfangsvorrichtungen kann die Vorrichtung mit einer Basiseinheit Informationsdaten über die Umgebung austauschen. Weitere Verfahren zum Navigieren eines Flurförderzeugs sind aus der US 2014/0074342 A1 und aus der DE 10 2017 011 768 A1 bekannt.

Außerdem beschreibt die US 2013/060461 A1 ein Verfahren und eine Vorrichtungen zur Verwendung mindestens eines beweglichen, vorpositionierten Objekts als Landmarke zur Lokalisierung eines Industriefahrzeugs. Das Verfahren umfasst das Platzieren mindestens eines beweglichen, vorpositionierten Objekts in einer physischen Umgebung, das Identifizieren von Merkmalen des vorpositionierten Objekts und das Bestimmen einer Position des Industriefahrzeugs relativ zu dem beweglichen, vorpositionierten Objekt.

Es ist die Aufgabe der Erfindung, das Navigieren eines vorzugsweise autonom oder teilautonom fahrenden Flurförderzeugs in einem vorbestimmten Bereich, wie auf einem Betriebshof, zu verbessern und insbesondere sicherer und verlässlicher zu machen.

Diese Aufgabe wird durch den Gegenstand des Patentanspruchs 1 gelöst. Bevorzugte Weiterbildungen der Erfindung sind in den Unteransprüchen beschrieben. Erfindungsgemäß ist somit ein Verfahren zum Navigieren eines Flurförderzeugs in einem vorbestimmten Bereich mit folgenden Verfahrensschritten vorgesehen:
- Bereitstellen einer Karte des vorbestimmten Bereichs mit wenigstens einer permanenten Landmarke,
- Eintragen einer temporären Landmarke in die Karte, wenn die temporäre Landmarke erstellt wird, wobei die temporäre Landmarke ein abgestelltes Flurförderzeug, eine abgestellte Wechselbrücke, ein abgestellter Anhänger oder ein abgestellter Container ist,
- Austragen der temporären Landmarke aus der Karte, wenn die temporäre Landmarke aufgehoben wird, und
- Navigieren des Flurförderzeugs in dem vorbestimmten Bereich auf der Grundlage der die permanente Landmarke und die temporäre Landmarke aufweisenden Karte, wobei
   der Schritt des Eintragens der temporären Landmarke (10) in die Karte (1), wenn die temporäre Landmarke (10) erstellt wird, umfasst:
- Übertragen wenigstens einer geographischen Koordinate der erstellen temporären Landmarke (10) an die Karte (1), dadurch gekennzeichnet,
dass der Schritt des Übertragens der geographischen Koordinate der erstellen temporären Landmarke an die Karte von der erstellten temporären Landmarke selbst erfolgt.

Damit wird ein Verfahren bereitgestellt, das z.B. auch auf stark frequentierten Betriebshöfen einsetzbar ist, auf denen temporär z.B. Flurförderzeuge, Wechselbrücken, Anhänger und/oder Container abgestellt werden. Die Erfindung ermöglicht es, auch diese nur temporär vorhandenen Landmarken bei der Navigation zu berücksichtigen, was die Navigation einfacher, sicherer und verlässlicher macht. Insbesondere ist gemäß einer bevorzugten Weiterbildung der Erfindung vorgesehen, dass die Karte eine Mehrzahl von temporären Landmarken aufweist. Genauso ist gemäß einer bevorzugten Weiterbildung der Erfindung vorgesehen, dass die Karte eine Mehrzahl von permanenten Landmarken aufweist.

Die permanente Landmarke kann grundsätzlich auf unterschiedliche Weisen in die Karte eingetragen sein, z.B. mittels eines einzigen Koordinatenpunktes. Gemäß einer bevorzugten Weiterbildung der Erfindung ist die permanente Landmarke jedoch mittels solcher geographischer Koordinaten in die Karte eingetragen, die die Position der zwei- oder dreidimensionalen räumlichen Ausdehnung der permanenten Landmarke beschreiben. Insbesondere bei größeren permanenten Landmarken kann damit erreicht werden, dass die Navigation des Flurförderzeugs hinsichtlich Präzision und Verlässlichkeit weiter verbessert ist. Vorzugsweise ist vorgesehen, dass die die temporäre Landmarke eindeutig identifizierenden Kennung mit solchen geographischen Koordinaten verknüpft ist, die die zweidimensionale oder die dreidimensionale räumliche Ausdehnung der temporären Landmarke beschreiben. Gemäß einer bevorzugten Ausgestaltung der Erfindung kann die geographische Koordinate der temporären Landmarke wenigstens eine satellitengestützt oder funkgestützt ermittelte geographische Koordinate des Abstellplatzes der erstellten Landmarke umfassen.

Gemäß einer bevorzugten Weiterbildung der Erfindung ist ferner vorgesehen, dass der Schritt des Eintragens der temporären Landmarken in die Karte, wenn die temporäre Landmarke erstellt wird, Folgendes umfasst:
- Übertragen einer die temporäre Landmarke eindeutig identifizierenden Kennung an die Karte.

Die Kennung der Landmarke umfasst dabei vorzugsweise den Typ der Landmarke, wie z.B. den Typ bzw. die Größe einer Palette oder den Typ bzw. die Größe eines Containers. Die geographische Koordinate der erstellten temporären Landmarke kann aber auch einfach nur eine Kennung, wie eine Nummer des Abstellplatzes sein, die den Abstellplatz eindeutig kennzeichnet. Insofern ist vorzugsweise also auch vorgesehen, dass die geographische Koordinate eine den Abstellplatz der erstellten temporären Landmarke eindeutig identifizierenden Kennung umfasst.

Genauso kann die die abgestellte Landmarke eindeutig identifizierende Kennung eine die Landmarke eindeutig kennzeichnende Nummer sein, wie die einen nach ISO 668 gefertigten Seecontainer eindeutig kennzeichnende Containernummer. Diese Containernummer besteht aus dem Eigentümer- oder Betreibercode, der Kategorieziffer, der Seriennummer und der Prüfziffer.

Im Übrigen ist gemäß einer bevorzugten Weiterbildung der Erfindung vorgesehen, dass der Schritt des Eintragens der temporären Landmarken in die Karte, wenn die temporäre Landmarke erstellt wird, ferner umfasst:
- Eintragen von geometrische und/oder optische Eigenschaften der temporären Landmarke in die Karte.

Dies kann das Wiederauffinden der temporären Landmarke bzw. das Identifizieren der temporären Landmarke erleichtern, wenn sie wieder abgeholt, also wieder aufgehoben werden soll.

Erfindungsgemäß ist ferner, dass der Schritt des Übertragens der geographischen Koordinate der erstellen temporären Landmarke an die Karte von der erstellten temporären Landmarke selbst erfolgt. Dies macht das Verfahren besonders einfach, da auf diese Weise keine zusätzlichen Vorrichtungen für das erfindungsgemäße Verfahren bereitgestellt werden müssen.

Die Karte kann grundsätzlich an unterschiedlichen Stellen geführt werden, z.B. in einem Flurförderzeug oder auch in mehreren Flurförderzeugen gleichzeitig. Gemäß einer bevorzugten Weiterbildung der Erfindung wird die Karte jedoch zentral in einer Zentraleinheit geführt. Das Eintragen einer temporären Landmarke in die Karte, wenn die temporäre Landmarke erstellt wird, bedeutet damit ein Übertragen einer entsprechenden Information an die Zentraleinheit. Eine derartige Zentraleinheit, quasi als gemeinsamer Server, vereinfacht das Verfahren und reduziert den Hardware-Aufwand.

Das Eintragen der temporären Landmarke in die Karte kann zu unterschiedlichen Zeiten und Anlässen erfolgen. Gemäß einer bevorzugten Ausgestaltung der Erfindung erfolgen die Schritte des Eintragens der temporären Landmarken in die Karte, wenn die temporäre Landmarke erstellt wird, und des Austragens der temporären Landmarken aus der Karte, wenn die temporäre Landmarke aufgehoben wird, in Echtzeit. Auf diese Weise kann ein besonders hoher Nutzen aus der Karte gezogen werden, da damit praktisch immer aktuelle Kartendaten vorliegen, die die aktuelle Situation in dem vorbestimmten Bereich widerspiegeln.

Als permanente Landmarken kommen grundsätzlich ganz unterschiedliche Einrichtungen in Betracht. Vorzugsweise wird eine permanente Landmarke von einem Gebäude, einem topographischen Objekt, einer Markierung, einem Schild oder einer Begrenzung des vorbestimmten Bereichs gebildet. Weiterhin gilt, dass das Flurförderzeug vorzugsweise ein autonom oder teilautonom fahrendes Fahrzeug ist.

Im Übrigen ist vorzugsweise auch vorgesehen, dass das Fahrzeug zum Navigieren mit Hilfe der Karte seine Position mittels satellitengestützt oder funkgestützt ermittelter Koordinaten bestimmt, z.B. mittels DGPS-Koordinaten. Zum Navigieren relativ zu anderen nicht abgestellten Fahrzeugen ist das Flurförderzeug vorzugsweise mit einer optischen Kamera, mit einem LIDAR-Sensor und/oder mit Ultraschallsensoren ausgestattet.

Nachfolgend wir die Erfindung anhand eines bevorzugten Ausführungsbeispiels unter Bezugnahme auf die Zeichnungen weiter im Detail erläutert.

### In den Zeichnungen zeigen

Fig. 1 schematisch eine Karte mit permanenten Landmarken gemäß einem bevorzugten Ausführungsbeispiel der Erfindung,
Fig. 2 schematisch eine Zentraleinheit gemäß dem vorliegend beschriebenen bevorzugten Ausführungsbeispiel der Erfindung, welche Zentraleinheit mit einer Mehrzahl von Flurförderzeugen per Funk kommuniziert,
Fig. 3 schematisch ein Flurförderzeug gemäß dem vorliegend beschriebenen bevorzugten Ausführungsbeispiel der Erfindung,
Fig. 4 schematisch eine Karte mit permanenten Landmarken und mit temporären Landmarken gemäß dem vorliegend beschriebenen bevorzugten Ausführungsbeispiel der Erfindung und
Fig. 5 schematisch die Karte aus Fig. 4, aus der temporäre Landmarken wieder ausgetragen worden sind.

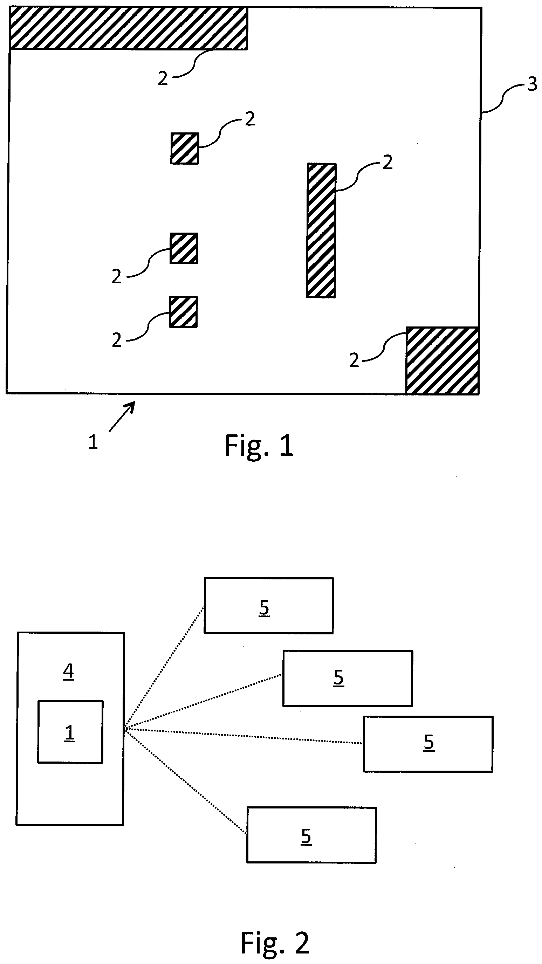

Aus Fig. 1 ist im Hinblick auf das hier beschriebene bevorzugte Ausführungsbeispiel der Erfindung schematisch eine Karte 1 eines Bereichs eine Betriebshofs ersichtlich, der im Wesentlichen eine rechteckige äußere Begrenzung 3 aufweist, innerhalb derer bereits eine Mehrzahl permanenter Landmarken 2 eingetragen sind. Die Karte 1 gibt die geographischen Koordinaten der zweidimensionalen Begrenzungen dieser permanenten Landmarken 2 sowie die geographischen Koordinaten der äußeren Begrenzung 3 des Betriebshofs an. Bei diesen permanenten Landmarken kann es sich z.B. um Gebäude, topographische Objekte, Markierungen und Schilder handeln. Gemein ist den permanenten Landmarken 2, dass sie den Bereich des Betriebshofs begrenzen, in dem sich Flurförderfahrzeuge 5 bewegen können. Mit anderen Worten stellen die permanenten Landmarken 2 Hindernisse dar, die von Flurförderfahrzeugen 5 beim Befahren des Betriebshofs und bei einer entsprechenden Navigation innerhalb des Betriebshofs berücksichtigt werden müssen. Im Übrigen stellt die äußere Begrenzung 3 des Betriebshofs natürlich praktisch auch eine permanente Landmarke dar, da die Flurförderzeuge 5 beim Befahren des Betriebshofs nicht über diese äußere Begrenzung 3 hinausfahren sollen bzw. können.

Wie schematisch aus Fig. 2 ersichtlich, wird diese Karte 1 zentral in einer Zentraleinheit 4 gehalten und geführt. Diese Zentraleinheit 4 ist per Funk mit allen Flurförderzeugen 5 verbunden, die sich innerhalb des Betriebshofs bewegen. Die Funkverbindungen sind in Fig. 2 durch punktierte Linien dargestellt. Auf diese Weise haben all diese Flurförderzeuge 5 Zugriff auf die Karte 1 und damit auf die aufgrund der Karte 1 verfügbaren Navigationsinformationen. Im Übrigen können die Flurförderzeuge 5 aufgrund ihrer jeweiligen Funkverbindung mit der Zentraleinheit 4 auch Informationen an die Zentraleinheit 4 schicken, um die Kartendaten zu aktualisieren bzw. zu ergänzen. Da die Karte 1, wie oben dargestellt, die permanenten Landmarken 2 des Betriebshofs sowie die äußere Begrenzung 3 des Betriebshofs aufweist, ist es für die Flurförderzeuge 5 möglich, innerhalb des Betriebshofs zu navigieren, ohne mit den permanenten Landmarken 2 in Konflikt zu geraten.

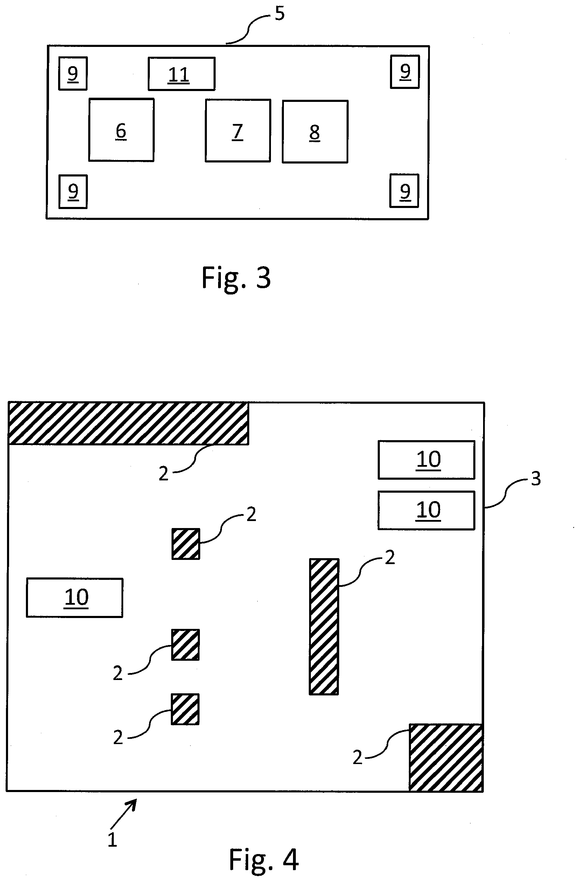

In Fig. 3 ist schematisch eines der Flurförderzeuge 5 dargestellt, die sich innerhalb des Betriebshofs bewegen. Dieses Flurförderzeug 5 weist für die Satellitennavigation einen GPS-Empfänger 6 auf. Mittels der Satellitennavigation kann das Flurförderzeug 5 die geographischen Koordinaten des Ortes feststellen, an dem es sich gerade befindet. Dies erlaubt dem Flurförderzeug 5 mit Hilfe der Karte 1 innerhalb des Betriebshofs zu navigieren. Im Übrigen weist das Flurförderzeug 5 weitere Sensoren auf, nämlich eine optische Kamera 7, einen LIDAR-Sensor 8 und eine Mehrzahl von Ultraschallsensoren 9. Diese weiteren Sensoren erlauben dem Flurförderzeug 5 die Erfassung seiner Umgebung in Echtzeit, so dass auch andere in dem Betriebshof fahrende Flurförderzeuge 5 erfasst und dynamisch für die Navigation innerhalb des Betriebshofs berücksichtigt werden können. Insgesamt erlaubt das ein vollautonomes Fahren des Flurförderzeugs 5 innerhalb des Betriebshofs.

Außerdem weist das Flurförderzeug 5 eine Funkeinheit 11 auf, um mit der Zentraleinheit per Funk kommunizieren zu können. Die anderen Flurförderzeuge 5 für den Betriebshof, die schematisch in Fig. 2 dargestellt sind, sind entsprechend mit einer Funkeinheit 11 zur Kommunikation mit der Zentraleinheit 4, einem GPS-Empfänger 6 zur Satellitennavigation und mit einer optische Kamera 7, einem LIDAR-Sensor 8 und einer Mehrzahl von Ultraschallsensoren 9 ausgerüstet, um ihre sich dynamisch ändernde Umgebung erfassen zu können.

Aufgabe der Flurförderzeuge 5 bei dem hier beschriebenen bevorzugten Ausführungsbeispiel der Erfindung ist es, innerhalb des Betriebshofs Einrichtungen, wie Container, Wechselbrücken und Paletten abzustellen und ggf. später wieder abzuholen. Diese zumindest temporär innerhalb des Betriebshofs abgestellten Einrichtungen stellen temporäre Landmarken dar, die damit ebenfalls von Flurförderzeugen 5 bei ihrer Navigation innerhalb des Betriebshofs berücksichtigt werden müssen. Im Übrigen benötigen die Flurförderzeuge 5 Informationen über den Ort, an dem eine bestimmte Einrichtung abgestellt worden ist, wenn diese Einrichtung wieder abgeholt werden soll. Insofern ist es gemäß dem hier beschriebenen bevorzugten Ausführungsbeispiel der Erfindung vorgesehen, dass, wie schematisch in Fig. 4 dargestellt, temporäre Landmarken 10 in der zentral in der Zentraleinheit 4 gehaltenen und geführten Karte 1 eingetragen werden, wenn sie erstellt werden. Ausgehend von einem zuvor leeren Betriebshof, also einem Betriebshof, der noch keine temporäre Landmarke enthält, wie in Fig. 1 dargestellt, zeigt Fig. 4 nun bereits drei temporäre Landmarken 10, entsprechend dreier Einrichtungen, die zwischenzeitlich mittels der Flurförderzeuge 5 innerhalb des Betriebshofs abgestellt worden sind. Bei den temporären Landmarken 10 handelt es sich vorliegend um Wechselbrücken, die innerhalb des Betriebshofs abgestellt worden sind.

Das Eintragen der temporären Landmarken 10 in die Karte 1 erfolgt gemäß einen Ausführungsbeispiel, das nicht unter die Erfindung fällt, derart, dass dasjenige Flurförderzeug 5, das die jeweilige Wechselbrücke im Betriebshof abgestellt hat, unmittelbar nach dem Abstellen der Wechselbrücke der Zentraleinheit 4 per Funk mitteilt, dass sie diese Wechselbrücke an dem jeweiligen Abstellplatz abgestellt hat. Dazu übermittelt das Flurförderzeug 5 an die Zentraleinheit 4 eine eindeutige Kennung der jeweiligen Wechselbrücke sowie die geographischen Koordinaten der abgestellten Wechselbrücke, die zweidimensional die äußere Begrenzung des Abstellbereichs der jeweiligen Wechselbrücke kennzeichnen. Diese Informationen werden in der Zentraleinheit 4 entsprechend in die Karte 1 eingetragen. Im Gegensatz dazu ist erfindungsgemäß vorgesehen, dass der Schritt des Eintragens der temporären Landmarke 10 in die Karte 1, wenn die temporäre Landmarke 10 erstellt wird, ein Übertragen wenigstens einer geographischen Koordinate der erstellen temporären Landmarke 10 an die Karte 1 umfasst, wobei der Schritt des Übertragens der geographischen Koordinate der erstellen temporären Landmarke 10 an die Karte 1 von der erstellten temporären Landmarke (10) selbst erfolgt.

Statt der geographischen Koordinaten ist es natürlich auch möglich, nur eine Kennung des Abstellplatzes zu übertragen, also z.B. "Stellplatz 45", wenn in der Zentraleinheit 4 Informationen hinterlegt sind, die darüber Auskunft geben, wo die jeweiligen Abstellplätze in der Karte zu finden sind. Im Übrigen, ist es auch möglich, anstatt einer eindeutigen Kennung der Wechselbrücke nur den Typ der Wechselbrücke, wie "Typ C", oder die Abmessungen der Wechselbrücke an die Zentraleinheit 4 zu übertragen. Bei der Übertragung des Typs der Wechselbrücke an die Zentraleinheit 4 ist es natürlich wieder erforderlich, dass in der Zentraleinheit 4 Informationen hinterlegt sind, die es erlauben mit der Angabe des Typs die Wechselbrücke so als temporäre Landmarke 10 in die Karte 1 einzutragen, dass erkennbar ist, welchen Raum bzw. welche Fläche sie innerhalb des Betriebshofs einnimmt und welcher Raum bzw. welche Fläche insofern bei dem Fahren innerhalb des Betriebshofs von den Flurförderzeugen 5 als nicht zugänglich berücksichtigt werden muss.

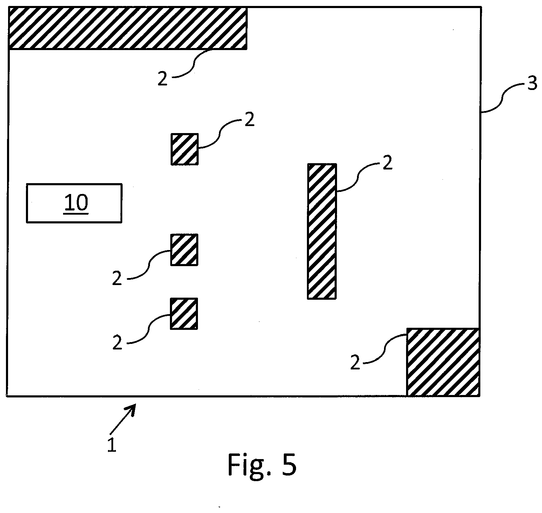

Aus Fig. 5 ist schließlich ersichtlich, dass in die Karte 1 eingetragene temporäre Landmarken 10 auch wieder aus der Karte 1 ausgetragen werden, wenn sie aufgehoben werden, also wenn eine entsprechende Wechselbrücke abgeholt und entweder vom Betriebshof entfernt oder auf dem Betriebshof umgelagert wird. Wie aus Fig. 5 ersichtlich, sind hier die beiden temporären Landmarken 10, die in Fig. 4 noch rechts oben in der Karte 1 dargestellt waren, nicht mehr vorhanden, weil sie von einem Flurförderzeug 5 vom Betriebshof entfernt worden sind. Das Austragen dieser temporären Landmarken 10 aus der Karte 1 ist dabei derart erfolgt, dass unmittelbar nach Aufladen der jeweiligen Wechselbrücke auf das Flurförderzeug 5 von dem entsprechenden Flurförderzeug 5 per Funk der Zentraleinheit 4 mitgeteilt worden ist, dass die Wechselbrücke sich nicht mehr an ihrem bisherigen Abstellort befindet und die entsprechende temporäre Landmarke 10 damit aufgehoben worden ist.

Insgesamt wird damit das Navigieren der autonom fahrenden Flurförderzeuge 5 in dem Betriebshof auf einfache Weise deutlich verbessert, nämlich sicherer und verlässlicher gemacht, da von dem auf dem Betriebshof fahrenden Flurförderzeugen 5 in Echtzeit bewirkt wird, dass temporäre Landmarken 10, vorliegend in Form von Wechselbrücken, in die Karte 1 eingetragen bzw. wieder ausgetragen werden, wenn sie erstellt bzw. wieder aufgehoben werden. Im Übrigen kann das vorliegend beschriebene Verfahren auch das Auffinden und Anfahren der Wechselbrücken erheblich erleichtern.

### Bezugszeichenliste

- 1: Karte
- 2: permanente Landmarken
- 3: äußere Begrenzung
- 4: Zentraleinheit
- 5: Flurförderzeuge
- 6: GPS-Empfänger
- 7: optische Kamera
- 8: LIDAR-Sensor
- 9: Ultraschallsensoren
- 10: temporäre Landmarken
- 11: Funkeinheit

## Patentansprüche

1. Verfahren zum Navigieren eines Flurförderzeugs (5) in einem vorbestimmten Bereich mit folgenden Verfahrensschritten:
- Bereitstellen einer Karte (1) des vorbestimmten Bereichs mit wenigstens einer permanenten Landmarke (2),
- Eintragen einer temporären Landmarke (10) in die Karte (1), wenn die temporäre Landmarke (10) erstellt wird, wobei die temporäre Landmarke (10) ein abgestelltes Flurförderzeug, eine abgestellte Wechselbrücke, ein abgestellter Anhänger oder ein abgestellter Container ist,
- Austragen der temporären Landmarke (10) aus der Karte (1), wenn die temporäre Landmarke (10) aufgehoben wird, und
- Navigieren des Flurförderzeugs (5) in dem vorbestimmten Bereich auf der Grundlage der die permanente Landmarke (2) und die temporäre Landmarke (10) aufweisenden Karte, wobei
der Schritt des Eintragens der temporären Landmarke (10) in die Karte (1), wenn die temporäre Landmarke (10) erstellt wird, umfasst:
- Übertragen wenigstens einer geographischen Koordinate der erstellen temporären Landmarke (10) an die Karte (1), **dadurch gekennzeichnet,**
**dass** der Schritt des Übertragens der geographischen Koordinate der erstellen temporären Landmarke (10) an die Karte (1) von der erstellten temporären Landmarke (10) selbst erfolgt.

2. Verfahren nach Anspruch 1, wobei die permanente Landmarke (2) und/oder die temporäre Landmarke (10) mittels solcher geographischer Koordinaten in die Karte (1) eingetragen wird, die die Position der zwei- bzw. dreidimensionalen räumlichen Ausdehnung der permanenten Landmarke (2) bzw. der temporären Landmarke (10) beschreiben.

3. Verfahren nach Anspruch 1 oder 2, wobei der Schritt des Eintragens der temporären Landmarke (10) in die Karte (1), wenn die temporäre Landmarke (10) erstellt wird, umfasst:
- Übertragen einer die temporäre Landmarke (10) eindeutig identifizierenden Kennung an die Karte (1).

4. Verfahren nach einem der vorherigen Ansprüche, wobei der Schritt des Eintragens der temporären Landmarken (10) in die Karte (1), wenn die temporäre Landmarke (10) erstellt wird, ferner umfasst:
- Eintragen geometrischer und/oder optischer Eigenschaften der Landmarke (10) in die Karte (4).

5. Verfahren nach einem der vorherigen Ansprüche, wobei die Karte (1) zentral in einer Zentraleinheit (4) geführt wird.

6. Verfahren nach einem der vorherigen Ansprüche, wobei das Flurförderzeug (5) ein autonom oder teilautonom fahrendes Fahrzeug ist.

7. Verfahren nach einem der vorherigen Ansprüche, wobei die Schritte des Eintragens der temporären Landmarke (10) in die Karte (1), wenn die temporäre Landmarke (10) erstellt wird, und/oder des Austragens der temporären Landmarke (10) aus der Karte (1), wenn die temporäre Landmarke (10) aufgehoben wird, in Echtzeit erfolgt.

## Claims

1. Method for navigating a ground conveyor (5) in a predetermined area comprising the following method steps:
providing a map (1) of the predetermined area with at least one permanent landmark (2);
entering a temporary landmark (10) into the map (1) when the temporary landmark (10) is created, wherein the temporary landmark (10) is a parked ground conveyor, a parked swap body, a parked trailer or a parked container;
removing the temporary landmark (10) from the map (1) when the temporary landmark (10) is removed; and
navigating the ground conveyor (5) in the predetermined area based on the map comprising the permanent landmark (2) and the temporary landmark (10), wherein
the step of entering the temporary landmark (10) into the map (1) when the temporary landmark (10) is created, comprises:
transmitting at least one geographic coordinate of the created temporary landmark (10) to the map (1),
**characterized in that**
the step of transmitting the geographic coordinate of the created temporary landmark (10) to the map (1) is carried out by the created temporary landmark (10) itself.

2. Method according to claim 1, wherein the permanent landmark (2) and/or the temporary landmark (10) is entered into the map (1) by means of such geographical coordinates which describe the position of the two-dimensional or three-dimensional spatial extent of the permanent landmark (2) or the temporary landmark (10).

3. Method according to claim 1 or 2, wherein the step of entering the temporary landmark (10) into the map (1) when the temporary landmark (10) is created comprises:
transmitting an identifier uniquely identifying the temporary landmark (10) to the map (1).

4. Method according to any one of the preceding claims, wherein the step of entering the temporary landmark (10) into the map (1) when the temporary landmark (10) is created further comprises:
entering geometric and/or optical characteristics of the landmark (10) into the map (4).

5. Method according to any one of the preceding claims, wherein the map (1) is centrally managed in a central unit (4).

6. Method according to any one of the preceding claims, wherein the ground conveyor (5) is an autonomously or semi-autonomously driving vehicle.

7. Method according to any one of the preceding claims, wherein the steps of entering the temporary landmark (10) into the map (1) when the temporary landmark (10) is created, and/or of removing the temporary landmark (10) from the map (1), when the temporary landmark (10) is removed, are carried out in real time.

## Revendications

1. Procédé de navigation d'un engin de manutention au sol (5) dans une région prédéterminée avec les étapes de procédé suivantes :
- la fourniture d'une carte (1) de la région prédéterminée avec au moins un point de repère permanent (2),
le report d'un point de repère temporaire (10) sur la carte (1) lorsque le point de repère temporaire (10) est établi, où le point de repère temporaire (10) est un engin de manutention au sol garé, une caisse mobile garée, une remorque garée ou un conteneur garé,
la sortie du point de repère temporaire (10) de la carte (1) lorsque le point de repère temporaire (10) est annulé, et
la navigation de l'engin de manutention au sol (5) dans une région prédéterminée sur la base de la carte présentant le point de repère permanent (2) et le point de repère temporaire (10), où
l'étape de report du point de repère temporaire (10) sur la carte (1) lorsque le point de repère temporaire (10) est établi, comprend :
- la reproduction d'au moins une coordonnée géographique du point de repère temporaire (10) établi sur la carte (1), **caractérisé en ce**
**que** l'étape de reproduction de la coordonnée géographique du point de repère temporaire (10) établi a lieu sur la carte (1) par le point de repère temporaire (10) établi lui-même.

2. Procédé selon la revendication 1, dans lequel le point de repère permanent (2) et/ou le point de repère temporaire (10) sont reportés sur la carte (1) au moyen de telles coordonnées géographiques qui décrivent la position de l'étendue bidimensionnelle, respectivement tridimensionnelle, dans l'espace du point de repère permanent (2), respectivement, du point de repère temporaire (10).

3. Procédé selon la revendication 1 ou la revendication 2, dans lequel l'étape de report du point de repère temporaire (10) sur la carte (2) lorsque le point de repère temporaire (10) est établi, comprend :
- la reproduction d'une identification identifiant de manière précise le point de repère temporaire (10) sur la carte (1).

4. Procédé selon l'une des revendications précédentes, dans lequel l'étape de report du point de repère temporaire (10) sur la carte (1) lorsque le point de repère temporaire (10) est établi, comprend :
- le report de caractéristiques géométriques, et/ou optiques du point e repère (10) sur la carte (4).

5. Procédé selon l'une des revendications précédentes, dans lequel la carte (1) est exploitée de manière centrale dans une unité centrale (4).

6. Procédé selon l'une des revendications précédentes, dans lequel l'engin de manutention au sol (5) est un véhicule circulant de manière autonome ou partiellement autonome.

7. Procédé selon l'une des revendications précédentes, dans lequel les étapes de report du point de repère temporaire (10) sur la carte (1) lorsque le point de repère temporaire (10) est établi, et/ou la sortie du point de repère temporaire (10) de la carte (1) lorsque le point de repère temporaire (10) est annulé, ont lieu en temps réel.
